Europäisches Patentamt

European Patent Office

Office européen des brevets

(11) Publication number : **0 589 680 A2**

# (12) EUROPEAN PATENT APPLICATION

(21) Application number : **93307474.2**

(22) Date of filing : **22.09.93**

(51) Int. Cl.⁵ : **G01M 19/00**

(30) Priority : **24.09.92 US 950832**

(43) Date of publication of application :
**30.03.94 Bulletin 94/13**

(84) Designated Contracting States :
**BE DE ES FR IT**

(71) Applicant : **TRICO PRODUCTS CORPORATION**
**817 Washington Street**
**Buffalo, NY 14301 (US)**

(72) Inventor : **Moein, Arman**
**63, Berehaven Drive**
**Amherst, New York (US)**
Inventor : **Behr, Michael Eugene**
**5301 Pine Tree Trail**
**Brighton, Michigan (US)**

(74) Representative : **Pedder, James Cuthbert**
**J.C. Pedder & Co. 38 Norbury Cross**
**Norbury London SW16 4JQ (GB)**

(54) **Wipe analysis system.**

(57)    A method for analyzing the performance of one or more wiper blades (60) includes wetting a predetermined area (12) of a windshield (10). The wiper blade (60) is passed across the predetermined area (12) and the area optically scanned by a video camera (C). Image data is recorded by the video camera (C) and fed to a data processor (D). The data processor, for example a microcomputer, analyzes the image data. Gray scale analysis and dividing the image data to focus on selected portions of the windshield (10) provide an objective test of the wiping quality of a wiper blade (60). A report, including graphic representation of the test results, is generated.

FIGURE 1

**EP 0 589 680 A2**

Jouve, 18, rue Saint-Denis, 75001 PARIS

FIGURE 3

FIGURE 2

EP 0 589 680 A2

## Background of the Invention

This invention pertains to the art of windshield wipers for automotive vehicles and more particularly to a system and method for analyzing the wipe quality of a windshield wiper blade. The system and method are particularly applicable to wiping a predetermined test area of a windshield, recording the results of the wiping operation, and analyzing the recorded information to provide an evaluation of wipe quality. It will be appreciated, however, that the invention has broader applications and may be advantageously employed in similar environments and applications.

One current, commercially used testing procedure of the wipe quality of a blade rubber is deemed to be highly subjective. By way of example only, this known arrangement employs a test stand that mounts a windshield thereon. A spray nozzle is located adjacent the windshield to deliver a continuous water spray, for example, on the order of 25 cubic inches per minute over a test surface area. Typically, the entire wipe area or travel path of the blade rubber(s) is wetted by the spray nozzle and, as the wiper blade reciprocates, the wipe area is analyzed by a human test monitor.

A motorized wiper arm receives the blade rubber to be tested thereon. The arm exerts a preselected force or load on the blade against the windshield. The force can be varied as desired. The temperature and relative humidity are monitored and ideally maintained within selected parameters. Again, and by way of example only, the temperature is maintained at 70° F., plus or minus 3° F., and the relative humidity maintained at 45%, plus or minus 5%.

The windshield is first cleaned with a mild abrasive cleanser prior to the start of testing. Current practice is to re-clean the windshield after a predetermined number of wiper blade tests. The subsequent cleanings, though, do not normally incorporate a cleanser but merely use water of a preselected hardness. The objective, of course, is to maintain control over as many test parameters as possible, thereby providing consistency between various wiper blades subjected to the wipe quality test.

The wiper blade is operated through a cycle, i.e., reciprocated back and forth across the test area of the windshield, under a continuous water spray from the nozzle. As previously indicated, current practice subjectively analyzes the wipe quality through visual observation of the windshield test area by a human test monitor. Specifically, a subjective rating is recorded based on visual observation. Six wiper strokes, or three complete cycles, are typically visually evaluated. A test number or letter is assigned on the basis of the observation and recorded.

For example, the wiper blade travels through a substantially semi-annular band across the windshield as the wiper arm pivots about a pivot axis. The arcuate, semi-annular wipe area is subdivided into three radially adjacent zones generally referred to as inner, middle, and outer zones. The arcuate zones are then weighted. In other words, different zones are assigned different relative values based on a preselected hierarchy of importance. The middle zone is deemed most critical for visibility through the windshield and therefore must meet more stringent wipe quality standards. A rating system is employed that depends on whether the wipe quality is fully clear, one or more fine lines are detectable, one or more medium lines, or one or more heavy lines are observed in a selected region.

According to this prior preferred arrangement, a score of ten (10) is assigned if the middle zone and the inner and outer zones are fully clear. A score of nine (9) may represent a wipe area where the middle zone is fully clear and one fine line appears in the inner and outer zones. As will be readily understood, still other rating systems can be used with equal success.

In addition to the numerical value assigned by the observer, a further rating system is often used to attempt to quantify the observed conditions. A letter may be used to rate the monitored conditions. Again, by way of example only, "H" may designate haze, "C" designates chatter, "LR" refers to lazy reversal, "NR" indicates no reversal, "PR" means partial reversal, "HL" designates heavy lines, "FL" means many fine lines, and "B" indicates band misses. Still other abbreviations, acronyms, or rating systems can be used, the above-noted list being merely representative of one preferred system. An overall, combined alphanumeric rating is then assigned to the test for each wiper blade based on the visual observation and subjective assignment of test values.

An original equipment manufacturer may conduct this type of test on a batch of wiper blades before the blades are shipped to the customer. The customer is provided with the test results and, as is typical, the customer conducts essentially the same type of test as a further check on quality. These same parameters are set up on the customer's test apparatus and the same subjective testing and analysis undertaken.

It is not uncommon, due to the subjective nature of the observation and assignment of a rating, that different scores are achieved for the same blade at different test sites under substantially identical conditions. Clearly, a need exists to standardize the analysis and base the results on more objective criteria than a tester's subjective determination.

## Summary of the Invention

The present invention contemplates a new and improved apparatus and method for evaluating wipe quality and overcomes the above-referenced problems and others. The proposed system and method provide a simple, economical, and objective criteria for analyzing the performance of a wiper blade.

According to the present invention, a windshield is mounted on a test stand for testing and analyzing the performance of a wiper blade. The blade is secured to an arm and adapted for reciprocation across a predetermined area of a clean windshield. The surface is illuminated by suitably positioned lights and a high resolution camera is directed toward the predetermined surface to capture a high resolution image of the cleaned test area. A water spray is directed onto the surface of the windshield and the surface is sprayed and wiped by the blade. A second high resolution image is captured and stored in a memory device. An analysis of the stored information is then undertaken.

According to another aspect of the invention, the light is diffused and reflected on to the surface of the windshield to provide a uniform illumination of the surface.

According to yet another aspect of the invention, a hard copy of the stored information is prepared.

According to a further aspect of the invention, the temperature and relative humidity conditions are controlled.

According to still another aspect of the invention, the image may be divided into zones and sections, portions of the image assigned a gray scale value, and the stored information weighted differently for the different regions.

A principal advantage of the invention is the ability to objectively analyze the performance of a wiper blade.

Another advantage of the invention is found in the ability to prepare a hard copy of the stored information for reference purposes.

Yet another advantage of the invention is realized by the ability to subsequently manipulate and analyze the information to evaluate the performance of a wiper blade as desired.

Still other advantages and benefits of the invention will become apparent to those skilled in the art upon a reading and understanding of the following detailed description.

## Brief Description of the Drawings

The invention may take physical form in certain parts and arrangements of parts, a preferred embodiment and method of which will be described in detail in this specification and illustrated in the accompanying drawings which form a part hereof, and wherein:

FIGURE 1 is a schematic plan view of a windshield with a graphical representation of the wipe test area as used in accordance with a prior art manner of rating wipe quality;

FIGURE 2 is an elevational view of the subject new test apparatus;

FIGURE 3 is an elevational view taken from the right-hand side of FIGURE 2;

FIGURE 4 is a schematic representation of the active image area of the camera and the transfer of data information to storage and analysis equipment;

FIGURE 5 is a box diagram schematically illustrating the hardware components of the subject invention;

FIGURE 6 is a binary image representative of water remaining on the surface of a windshield;

FIGURE 7A is a graphical mask representation of the wipe area traversed by a blade on the windshield surface;

FIGURE 7B illustrates a first step in a preferred method of analyzing the wipe area, dividing the mask area into three arcuate zones;

FIGURE 7C illustrates a second step in analyzing the wipe area in which each zone is divided in half;

FIGURES 7D and 7E show how each zone is further manipulated to define first, second, third, and fourth sections;

FIGURE 8 represents a composite printout of the wipe area, graphical masking of the wipe area, and numerical values calculated in accordance with the subject invention; and

FIGURE 9 is a summary flow chart of the steps to be performed in accordance with software implementing the wipe analysis.

## Detailed Description of the Preferred Embodiment and Method

Referring now to the drawings wherein the showings are for purposes of illustrating the preferred embodiment and method of the invention only and not for purposes of limiting same, the FIGURES show a test system **A** in which a mounting assembly **B** secures a windshield for test analysis. A scanner or camera **C** is positioned to record information during testing and transfer data to a processing means **D**.

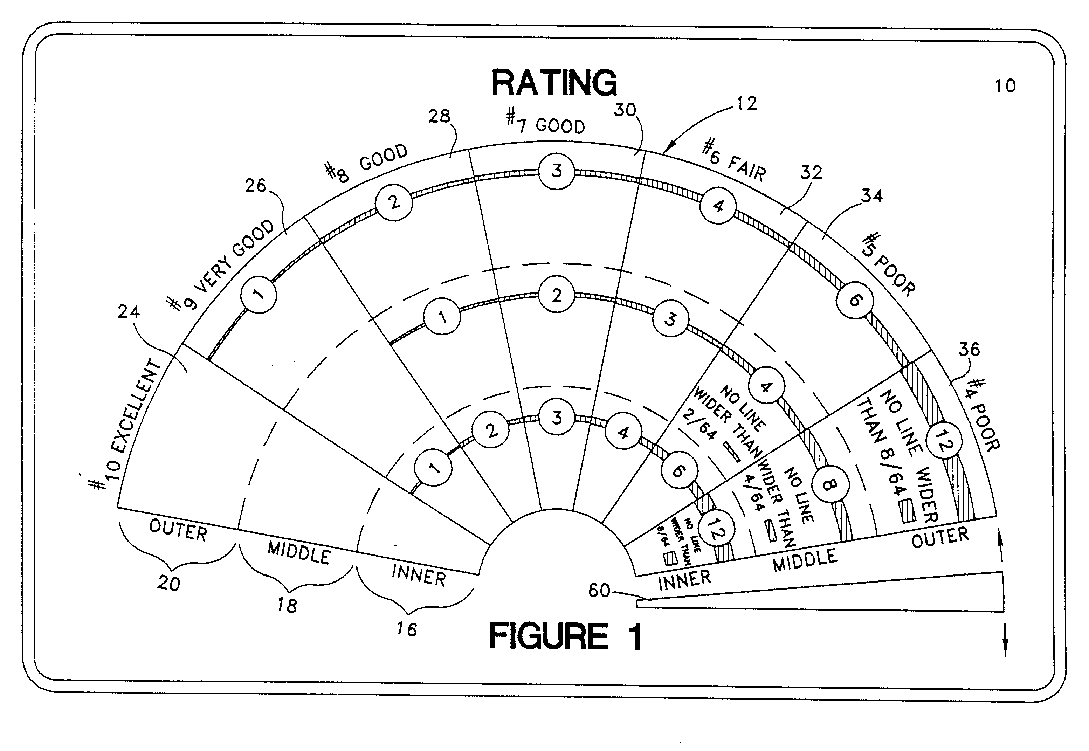

More particularly, and with reference to FIGURE 1, a windshield **10** has a predetermined semi-annular wipe area **12** which coincides with the travel path of a wiper blade across its surface. As shown and as discussed above in the Background of the Invention section, the semi-annular area **12** is divided into three radially adjacent areas, namely, an inner zone **16**, a middle zone **18** and an outer zone **20**. Additionally, and as shown in FIGURE 1, the wipe area has been further subdivided into contiguous circumferential sections which illustrate the rating system described above. In other words, the test area **12**, in actuality, is not subdivided in such a circumferential manner, although it could be if so desired. Extending from the left-hand side of FIGURE 1 in the clockwise direction toward the right-hand side, the standards applied under a prior art method of analysis are illustrated. They range from (i) no visible lines of moisture in circumferential section **24**, i.e., each of the inner, middle and outer radial zones **16**, **18**, **20** is clear, to (ii) an intermediate section **30** in which the middle zone has one medium line and the inner and outer zones, one medium line and one fine line, to section **36** where the middle zone **18** includes two heavy lines and the inner and outer zones **16**, **20** have one or more band lines.

For purposes of this discussion, a fine line has a dimension of approximately 1/64 of an inch, a medium line is 1/32 of an inch wide, a heavy line is approximately 1/16 of an inch and a band line is approximately 1/8of an inch. Thus, as demonstrated in FIGURE 1, the rating changes from "excellent" in section **24**, "very good" in section **26**, "good" in sections **28** and **30**, "fair" in section **32**, and "poor" in sections **34** and **36**. Without repeating much of the discussion in the Background of the Invention section, this prior art rating method is deemed to be too subjective and prone to variable interpretation with a lack of repeatability.

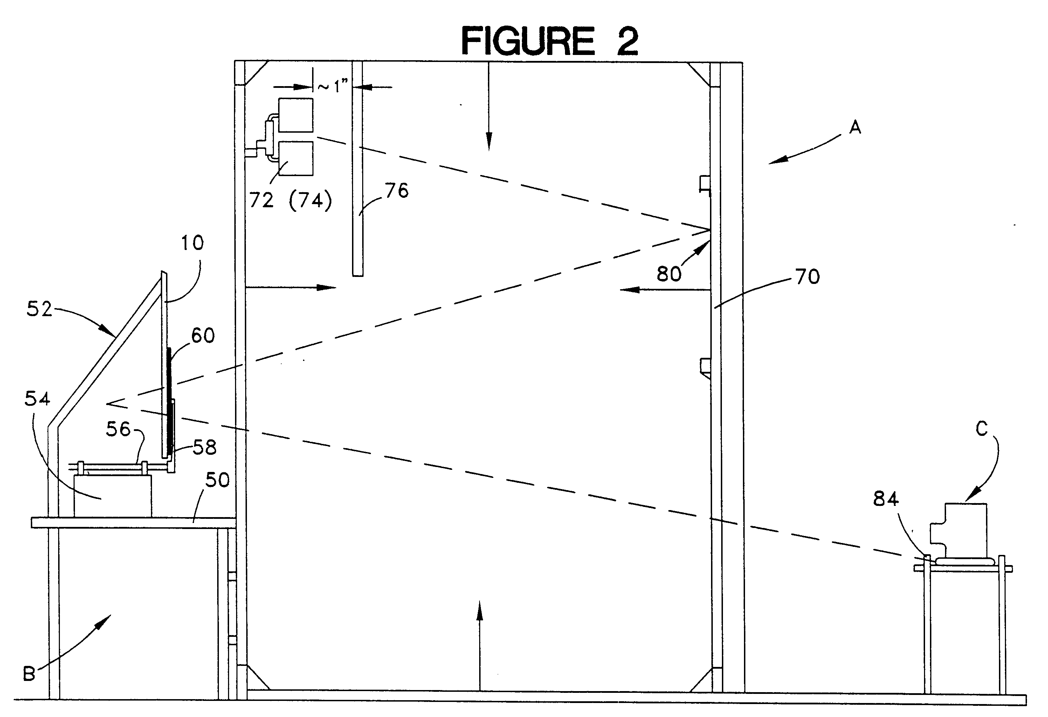

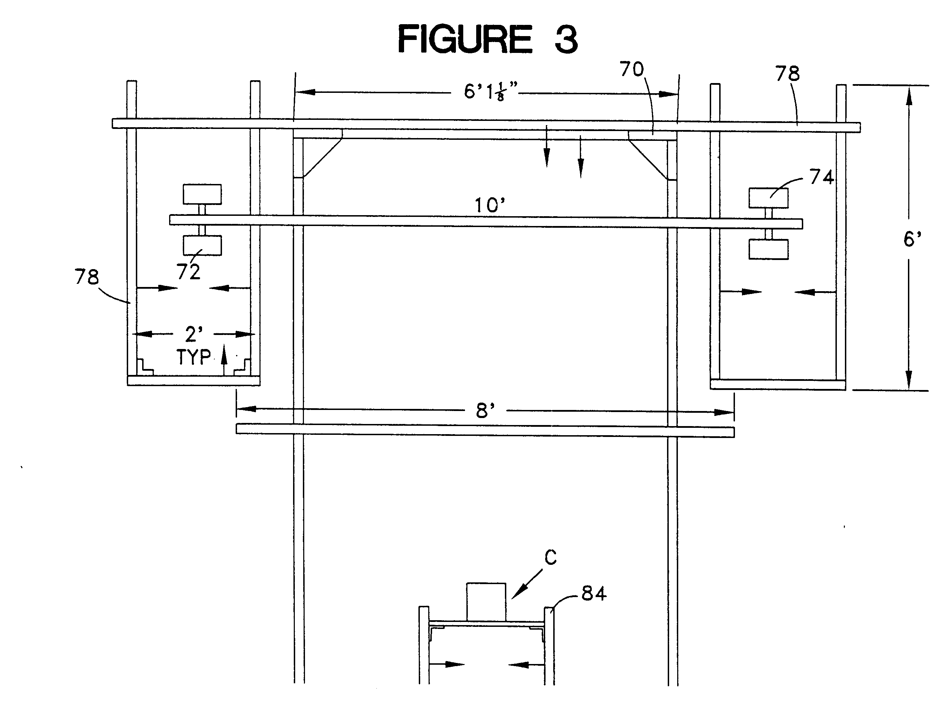

Turning now to FIGURES 2 and 3, the apparatus and method of the subject invention will be described in further detail. Specifically, the mounting assembly B includes a supporting frame work **50** defining an elevated table surface on which a test stand **52** is secured. The windshield **10** is secured to the test stand so that the windshield surface is disposed in a generally vertical orientation. Any suitable, well known mounting arrangement can be used to achieve this purpose, the details of which form no part of the subject invention.

A motor **54** is supported on the frame work adjacent the windshield. A drive shaft **56** extends from the motor, and operatively engages a wiper arm **58** at one end. Again, details of the drive shaft and wiper arm interconnection are well known in the art so that further discussion herein is deemed unnecessary. Removably secured to the wiper arm is a blade rubber **60**. It is contemplated that the supporting structure or harness (details not shown) of the wiper arm may vary to accommodate different types of wiper blades. Nevertheless, the overall objective is to be able to attach a wiper blade to the end of the arm for a limited period of time, i.e., for the duration of the test period, and then remove the blade once the test is complete to receive a new blade.

Disposed adjacent the test stand is additional supporting frame work **70**. It supports two sets of lights **72**, **74** at an area above and on opposite sides (FIGURE 3) of the windshield. The lights are positioned to direct the light away from the windshield and through a diffuser **76** associated with each set of lights. As best seen in FIGURE 3, the diffusers **76** are mounted in diffuser holders **78** that project from the frame work **70** as a pair of outriggers. In this manner, the diffusers **76** are located outside the perimeter of the frame work **70** but disposed in the travel path of the light. The diffuser evenly spreads and disperses the light before it continues its travel toward a reflective screen **80**. The screen is also mounted on the frame work 70 at an area spaced from and disposed opposite the lights with the diffuser located therebetween (FIGURE 2). After being dispersed through the diffuser, the light is reflected back in the direction of the windshield to fully and evenly illuminate its surface. Of course, it is particularly important that the wipe area of the windshield, particularly that portion of the windshield that defines the test area, be completely and evenly illuminated. Still other arrangements can be used with equal success as long as they satisfy these criteria.

Again, the lights, diffuser, and reflective screen may all be supported in any conventional manner. As illustrated in FIGURES 2 and 3, the travel path of the light from the diffuser to the reflective screen and to the windshield is unobstructed. Thus, once the light is initially diffused, it proceeds uninterrupted to illuminate the windshield surface. Commercially available brackets are used in the preferred embodiment, but still other structural arrangements can be used without departing from the scope and intent of the subject invention.

A camera **C** is also incorporated into the test system **A**. As shown, and without it being limited to such an arrangement, the camera C is located on the opposite side of the frame work **70** from the windshield **10** (FIGURE 2). The camera lens is directed toward the surface of the windshield and is located at an elevation below the windshield to effectively use the reflective nature of the light off of the windshield surface. A suitable support table **84** is provided to position the camera at a desired location that maximizes the use of the light.

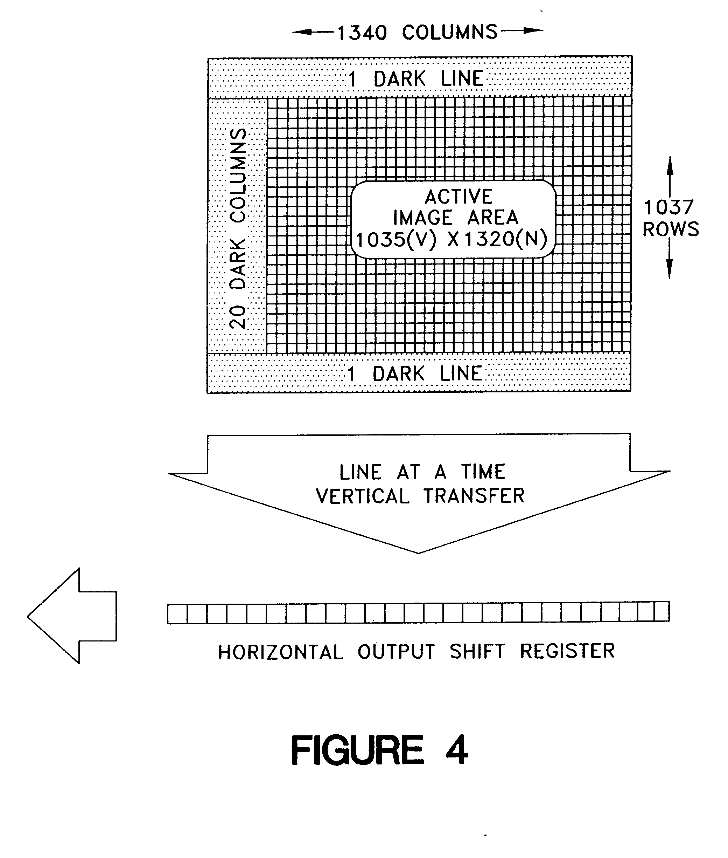

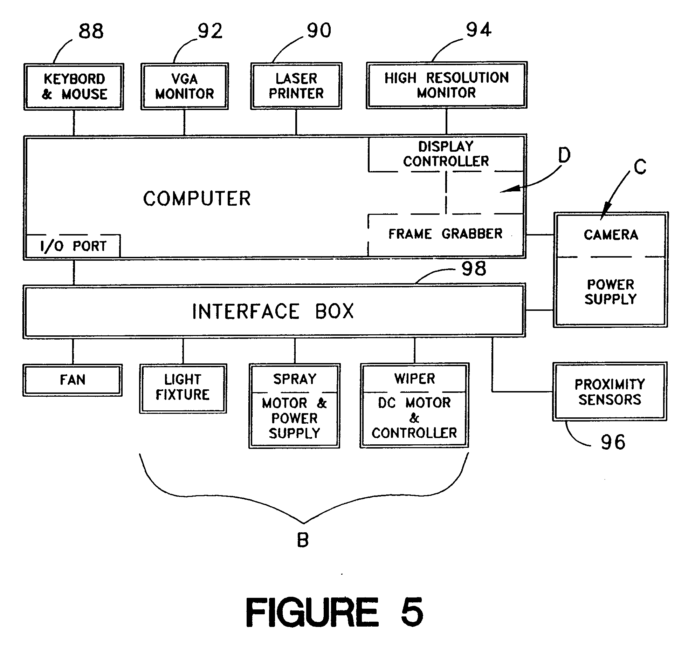

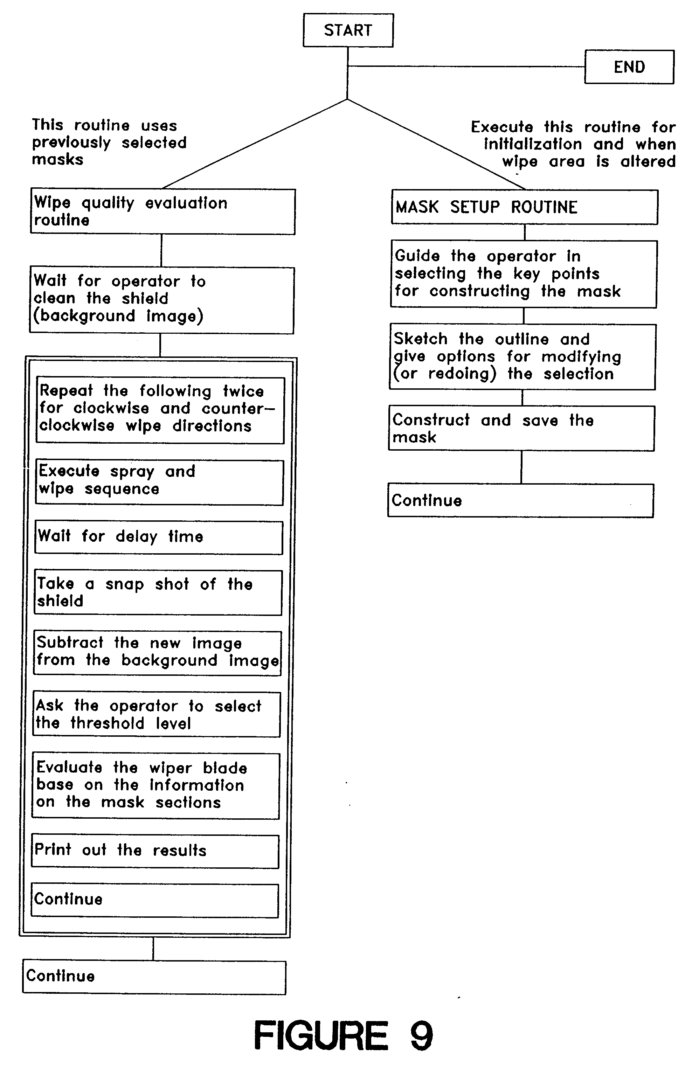

As best shown in FIGURE 3, the camera is centrally located between portions of the supporting frame work **70** so that the area between the camera and the windshield is unobstructed. Still other physical arrangements of the camera are contemplated, as long as the diffused light on the windshield surface is effectively considered. The support table **84** can also be used to house a suitable processing means **D**. For example, the table can be converted into a cabinet to support the processing means, such as a computer **D**, keyboard/mouse **88**, printer **90**, one or more monitors **92, 94**, sensors **96**, etc. (FIGURE 5) at a location closely adjacent the camera. Alternatively, the processing means may be disposed at a remote area and maintained in operative communication with the camera to receive data therefrom via cable or data transmission line. Light reflected from the windshield is optically scanned by the video camera which is a charge-coupled device (CCD) to obtain image data, again in a well-known manner. Of course, the windshield may be scanned by other means, e.g. electrically, without departing from the scope and intent of this invention. The image data according to a preferred arrangement is a 1,280 **H** x 1,024 **V** pixel array. This high resolution array provides substantially equal spacing in both horizontal and vertical directions. Each pixel may be assigned one of 256 levels of gray. The image data is then communicated to the data processor **D** which includes a memory device for storing the image data. For example, the image data may be transferred one line at a time in a vertical transfer with a subsequent horizontal output shift register (FIGURE 4). In any event, the data acquired from the video camera is processed, for example, by conducting a suitable gray scale analysis of the image data. Suitable software associated with the processing means permits analysis and calculations of the image data as desired and as further described below in connection with FIGURE 9. Due to the high resolution that incorporates 256 levels of gray for each pixel, any lines on the windshield surface that remain in the test or wipe area can be analyzed with great precision.

It is also contemplated that with one type of commercially available camera, a resolution on the order of 0.4 to 0.7 millimetres can be obtained. Although higher resolution cameras are available, the expense is presently deemed to outweigh the enhanced features and system requirements. Generally, the same structure and method of operation described herein are deemed equally applicable to higher resolution systems.

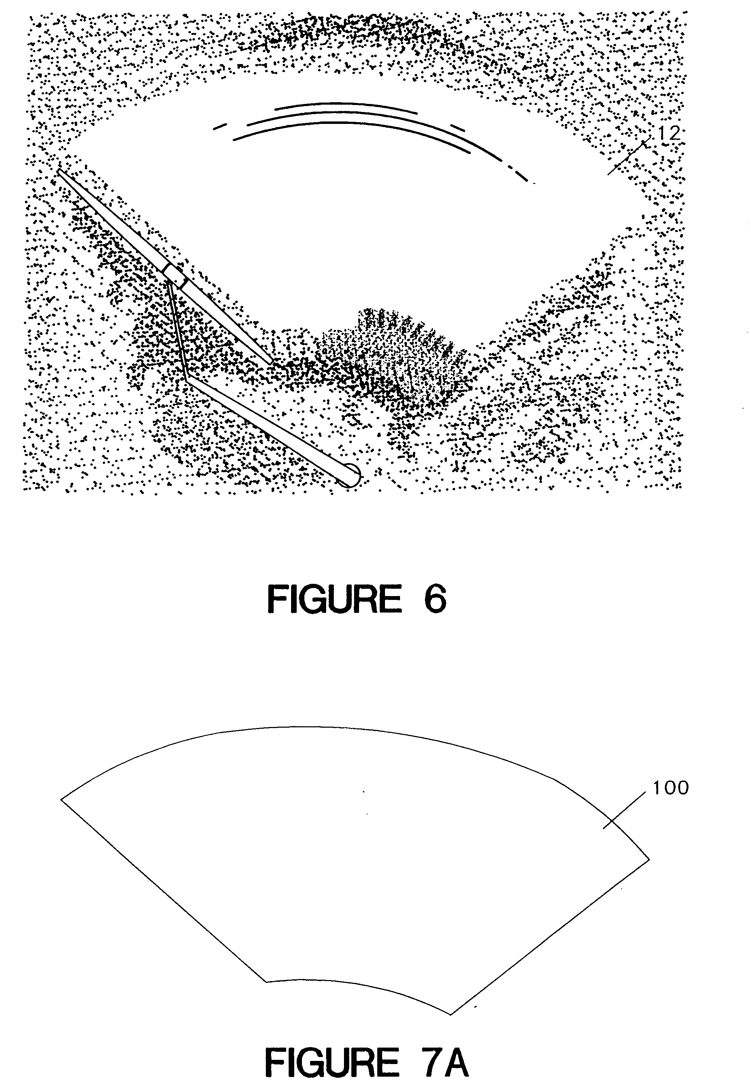

Further, it is contemplated that the image data representative of the wipe test area will be subdivided into several portions (hereinafter zones and sections) to provide additional wipe quality evaluation as desired. For example, FIGURES 6, 7A-7E and 8 show one preferred method of analyzing an arcuate wipe area, although it will be understood that these same principles are equally applicable to other wipe area configurations, e.g. generally rectangular. An image of the windshield immediately after it has been cleaned is stored in a memory device by the high resolution camera. The windshield is next sprayed with water and the blade cycled across the windshield to define a wipe area **12**. A second image of the windshield is taken and the second image subtracted from the first image so that a binary image (FIGURE 6) remains that is representative of the water on the windshield.

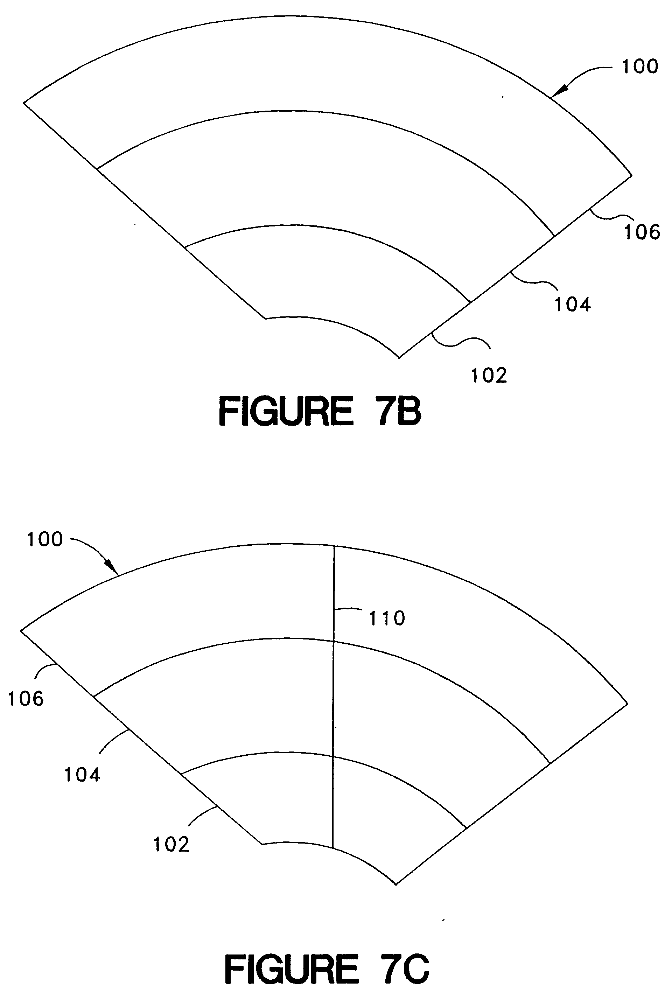

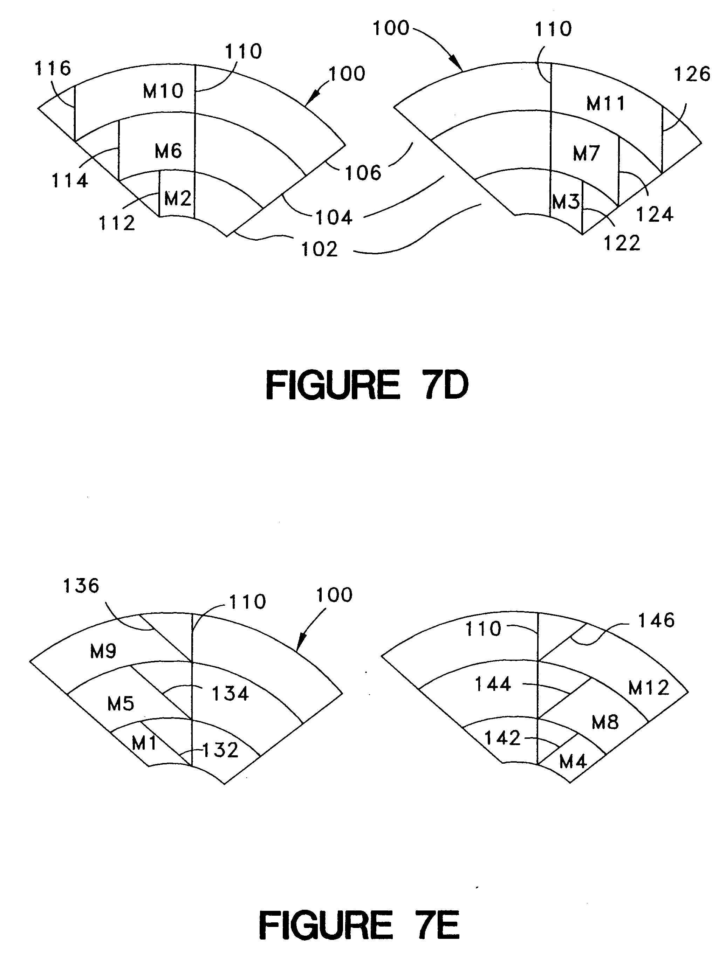

The outline of wipe area **12** is defined by the operator to construct a mask **100** (FIGURE 7A) that facilitates analysis of the image data. More particularly, the mask is initially divided into first, second, and third radially adjacent, semi-annular zones **102, 104, 106** (FIGURE 7B). The wipe area is further subdivided into six sections by first dividing each of the zones **102, 104, 106** in half (FIGURE 7C) by means of generally vertical line **110**. Since the top and bottom arcs demarcating the respective zones are parallel to one another, it is necessary to provide additional side boundaries to define the sections. The side boundaries are defined by generally vertical lines **112, 114, 116**, each parallel to the line **110**, on the left-hand side of the respective inner, middle, and outer zones **102, 104, 106** as shown in FIGURE 7D. These boundaries define sections **M2, M6,** and **M10**. Likewise, generally vertical lines **122, 124, 126** delineate the side boundaries on the right-hand side of the respective zones and define sections **M3, M7,** and **M11**. . Since the vertical lines **112, 114, 116** and **122, 124, 126** intersect with the terminal ends of the bottom arcs of each zone, the arc length of each of these sections is equal to one-half the length of the lower arc of the respective zone.

Turning to FIGURE 7E, the three zones are further divided into six additional sections. The side boundaries of these sections are based on the angular edges of the wipe area, or more specifically the edges of the mask. Thus, angular lines **132,134, 136** extend parallel to the left-hand edge and intersect the lower boundary arc of each zone at the vertical line **110** to define sections **M1, M5,** and **M9**, respectively. Similarly, the angular lines **142, 144, 146** extend from intersection with the vertical line **110** and the lower boundary arc of each zone in generally parallel relation to the right-hand edge of the wipe area/mask **100** to define sections **M4, M8,** and **M12**.

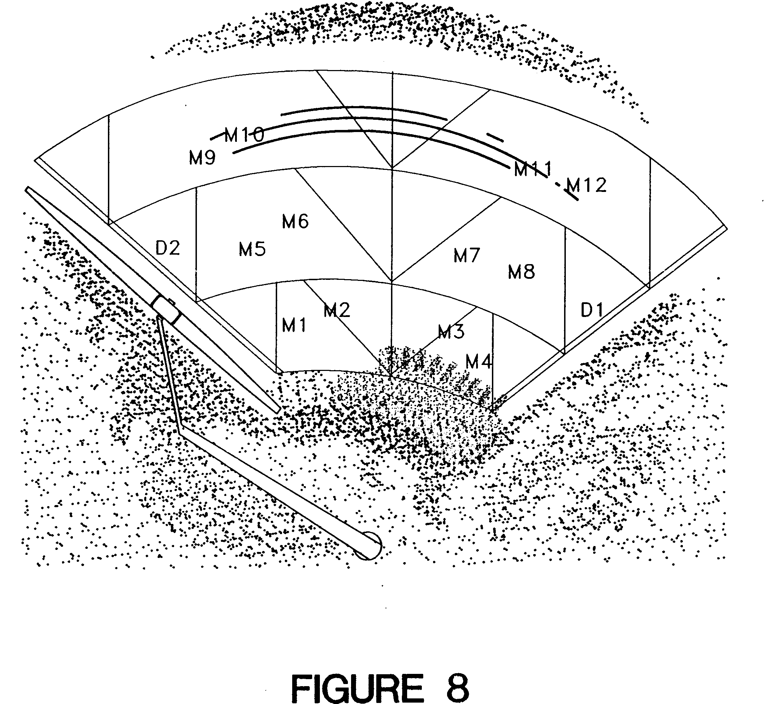

As best illustrated in FIGURE 8, these sections overlap extensively but provide complete coverage of the mask area that, in turn, represents the wipe area. Additionally, the test system monitors for a condition known as draw back or lazy reversal. If the wiper blade hesitates in flipping to its other side at the reversal point, i.e. at the extreme edges of the wipe area, the test system will investigate if water thickness is apparent in areas **D1** (counterclockwise), **D2** (clockwise). If width of water exceeds a predetermined quantity, a message of "DRAW BACK AND/OR POOR WIPE QUALITY", or similar message, will be displayed.

The maximum width of water in each section **M1** - **M12**, **D1** and **D2** is determined from the binary image. According to a preferred method, a rating based on the measured amount of water is then calculated in the following manner:

Wipe Quality Ratings are values from 1 to 10 (10 being the best), which are translated to water width in each zone and subsequently in each section in the following way:

Where:

X = Equivalent Width of Water = [0.0 >=X> = 49.0] = A + C + 1.2 * B

Y = Wipe Quality Index

And:

A = Maximum Width of Water Per Section Among the Four Sections of the Inner Zone (**102**)

B = Maximum Width of Water Per Section Among the Four Sections of the Middle Zone (**104**)

C = Maximum Width of Water Per Section Among the Four Sections of the Outer Zone (**106**)

Then:

$$Y = 1 - \frac{6}{\sqrt{1 + (\frac{X}{4.5})^3}} + 15(1 + 35(1 - \frac{1}{\sqrt{1 + (\frac{X}{50})^2}}))^{(-0.14x)}$$

By way of example only, values from one (1) to ten (10) will be assigned on the basis of this computation, where ten represents the best rating. The following table compares the wipe quality rating, lower limit of the computation before rounding off, and the equivalent width of the water expressed in millimetres ( + /-0.01):

| Wipe Quality Rating | Lower Limit of Wipe Quality Before Rounding It Off | Equivalent Width of Water in Terms of Millimetres |
| --- | --- | --- |
| 10 | 9.510676 | 0.24 |
| 9 | 8.504276 | 0.79 |
| 8 | 7.509275 | 1.46 |
| 7 | 5.502267 | 2.48 |
| 6 | 5.500335 | 9.85 |
| 5 | 4.501998 | 15.36 |
| 4 | 3.500346 | 20.3 |
| 3 | 2.501092 | 26.11 |
| 2 | 1.500380 | 35.59 |
| 1 | 1.006191 | 49.0 & up |

As also shown in FIGURE 8, other pertinent information can be printed and combined with the binary image. The illustrated printout is comprised of the binary image of FIGURE 6 overlapped with slightly faded outlines of the zones and sections of the mask. Additionally, the wipe quality rating, average widths of water for each section, time of test, date of test, blade identification, speed of wipe, delay time before taking the picture of the wiped windshield, direction of the wipe, and percentage of wet over dry area inside the wipe area are printed. Of course, still other information can be printed as desired. By using a high speed frame grabber, suitable image processing software, a computer **D**, and laser printer **90** (FIGURE 5), a successful image analysis that includes high resolution and gray scaling can be achieved along with the option of making hard copies on the laser printer. Further, the reciprocating notion of the wiper blade can be synchronized with the camera through use of interface box **98**.

One commercially available video camera that meets the above-mentioned criteria is the KODAK MEGAPLUS™ camera which is a charge-coupled device (CCD array). This camera provides a digital video output as described above and incorporates suitable timing signals to feed to an external frame capture system. This camera is also desirable in that it uses a high speed electromechanical shutter which can be triggered as desired.

As described above with the prior art method, a predetermined continuous water spray on the order of 25 cubic inches per minute is dispersed over the wipe area under the new wipe analysis system. The temperature and relative humidity are also maintained at constant levels in order to reduce the number of variables that would otherwise effect wipe quality. Additionally, the windshield is periodically cleaned in a manner similar to that described above so that evaluation of six wiper strokes with three complete cycles can be captured on the video camera, analyzed, and if desired, a hard copy printed on the laser printer.

The flow chart of FIGURE 9 illustrates one preferred manner of manipulating the image data recorded by the camera and transferred to the computer. More particularly, an operator chooses between using previously configured masks or setting up a new mask. If the latter, appropriate installation instructions will be provided to the operator guiding him through a setup procedure of selecting key points, sketching an outline of the mask, and saving the mask for future use.

Alternatively, after constructing a mask or using a previously saved mask, an appropriate set of instructions or menus will prompt the operator through the wipe quality evaluation routine. The operator is instructed to clean the windshield so that the initial background image can be stored. Thereafter, the wipe direction is selected, a spray and wipe sequence executed, which preferably includes multiple passes of the wiper blade over the predetermined area, a predetermined time period allowed to lapse, and a second image captured by the camera. The new image is then subtracted from the background image, the threshold level adjusted by the operator to eliminate random noise, and the analysis of the wipe area conducted. The display screen will also prompt the operator to print the results if so desired. Still further, the analysis can be conducted again.

As the invention has been described with reference to the preferred embodiment and method, obviously modifications and alterations will occur to others upon a reading and understanding of the specification. By way of example, it is within the purview of the invention to provide a test stand which utilizes a complete windshield wiping system, e.g. two reciprocating arms, each with a wiper blade, and wherein the entire wiped area of the multiple wipers is covered by the camera view. It is intended to include all such modifications and alterations insofar as they come within the scope of the appended claims or the equivalents thereof.

## Claims

1. A method for analyzing the performance of a wiper blade wiping across a windshield, the method comprising the steps of:

    wetting a predetermined area (**12**) of the windshield (**10**);
    passing the wiper blade (**60**) across the predetermined area (**12**);
    scanning the predetermined area (**12**);
    storing information in a memory device (D) based on the scanning step; and,
    processing the stored information to provide a rating for the wiper blade (**60**).

2. The method as defined in claim 1, wherein the scanning step includes recording with a video camera (**C**) discrete images of the predetermined area (**12**).

3. The method as defined in claim 1 or 2 and comprising the further step of illuminating the predetermined area (**12**) of the windshield (**10**) during the scanning step.

4. The method as defined in claim 3 wherein the illuminating step includes diffusing light uniformly onto the predetermined area (**12**).

5. The method of claim 3 or 4, wherein the scanning step is performed on light reflected from the predetermined area (**12**) of the windshield (**10**).

6. The method as defined in any preceding claim, and comprising the further step of dividing the stored information into desired portions for portional analysis of the predetermined area (**12**).

7. The method as defined in any one of claims 1 to 5, wherein the computing step includes dividing the predetermined area into desired portions, weighing the stored information differently for different portions, calculating values for each of the different portions based on the image data information stored in the memory device (**D**), and determining an overall value for the predetermined area (**12**).

8. The method as defined in any preceding claim, and comprising the further step of preparing a hard copy of the stored information.

9. The method as defined in any preceding claim, and comprising the further step of maintaining predetermined temperature and relative humidity conditions during the analysis.

10. The method as defined in any preceding claim, and comprising the further step of cleaning the predetermined area (**12**) of the windshield (**10**) before the remaining steps.

11. The method as defined in any preceding claim, wherein the passing step includes multiple cycles of wiping action.

12. A method of analyzing the performance of a windshield wiper blade comprising the steps of:
mounting the blade (**60**) to a power driven arm (**58**) which is supported to follow a reciprocating path over a windshield (**10**);
spraying the windshield (**10**) with a wetting solution;
wiping the blade (**60**) across the wetted windshield (**12**) for a predetermined number of strokes of the arm (**58**);
uniformly lighting the windshield (**10**) over at least the wiped area thereof;
recording image data of the wiping operation of the blade (**60**) after the wiping step using a video camera (**C**) and storing the image data; and
performing a portional analysis of the image data to determine the location, number and size of imperfections in the wiping remaining on the windshield (**10**) after the wiping step.

13. The method as defined in claim 12, and comprising the further step of recording the results after the wiping has stopped.

14. The method as defined in claim 12 or 13, and comprising the further step of printing one or more video frames with the results of the portional analysis.

15. The method as defined in claim 12, 13 or 14, and comprising the further step of separately weighing the sections in the performing step.

16. The method as defined in any one of claims 12 to 15, wherein the wiping step includes multiple cycles of blade (**60**) reciprocation across the windshield (**10**).

17. The method as defined in any one of claims 12 to 16, wherein the wiping step is continuous across the windshield (**10**).

18. A device for analyzing the performance of windshield wiper blades including;
a test stand (**52**) including a windshield (**10**), a wiper arm (**58**) mounted to extend over a predetermined part of said windshield (**10**), a connector on said arm (**58**) for receiving a wiper blade (**60**) for testing, means (**54**, **56**) for moving said arm (**58**) in a predetermined path for causing the wiper blade to wipe a predetermined area (**12**) of said windshield (**10**), and means for wetting the windshield (**10**), characterised by
lighting means (**72**, **74**) for illuminating at least the predetermined area (**12**) of said windshield (**10**),
an electronic camera means (**C**) supported to view said predetermined area (**12**) and record images thereof,
memory means (**D**) receiving image information from said camera (**C**) and storing image information of said predetermined area after wetting and wiping by a wiper blade (**60**) under test,
processing means (**D**) receiving image information from said memory means for analyzing the stored image information and providing a rating for the tested wiper blade (**60**).

19. A device as defined in claim 18, wherein said lighting means includes a light source (**72**, **74**) aimed toward said windshield (**10**) and a diffuser (**76**)in front of said light source (**72**, **74**) for diffusing the light from said source (**72**, **74**) evenly over said predetermined area (**12**) of said windshield (**10**).

20. A device as defined in claim 18 or 19, wherein said camera (**C**) is mounted in spaced relation to said windshield (**10**) so as to have a direct view of the wetted and wiped predetermined area (**12**) of said windshield (**10**).

21. A device as defined in any one of claims 18 to 20, wherein said processing means (**D**) divides the image information into predetermined portions (**M1** - **M12, D1, D2**) and weighs the stored image information differently for different ones of the portions (**M1** - **M12, D1, D2**), then calculates values for each of the portions (**M1** - **M12, D1, D2**) of the image information according to imperfections in the clarity of the portions (**M1** - **M12, D1, D2**), and then calculates an overall value for the image of the predetermined wiped area (**12**).

# RATING

**FIGURE 1**

#10 EXCELLENT · #9 VERY GOOD · #8 GOOD · #7 GOOD · #6 FAIR · #5 POOR · #4 POOR

OUTER · MIDDLE · INNER · INNER · MIDDLE · OUTER

NO LINE WIDER THAN 2/64
NO LINE WIDER THAN 4/64
NO LINE WIDER THAN 6/64
NO LINE WIDER THAN 8/64

EP 0 589 680 A2

# FIGURE 2

EP 0 589 680 A2

**FIGURE 3**

←—1340 COLUMNS—→

1 DARK LINE

20 DARK COLUMNS

ACTIVE
IMAGE AREA
1035(V) X 1320(N)

1037
ROWS

1 DARK LINE

LINE AT A TIME
VERTICAL TRANSFER

HORIZONTAL OUTPUT SHIFT REGISTER

# FIGURE 4

FIGURE 5

FIGURE 6

FIGURE 7A

100

106

104

102

# FIGURE 7B

100

110

106

104

102

# FIGURE 7C

# FIGURE 7D

# FIGURE 7E

FIGURE 8

START

END

This routine uses previously selected masks

Execute this routine for initialization and when wipe area is altered

Wipe quality evaluation routine

MASK SETUP ROUTINE

Wait for operator to clean the shield (background image)

Guide the operator in selecting the key points for constructing the mask

Repeat the following twice for clockwise and counter-clockwise wipe directions

Sketch the outline and give options for modifying (or redoing) the selection

Execute spray and wipe sequence

Construct and save the mask

Wait for delay time

Continue

Take a snap shot of the shield

Subtract the new image from the background image

Ask the operator to select the threshold level

Evaluate the wiper blade base on the information on the mask sections

Print out the results

Continue

Continue

# FIGURE 9